# EUROPEAN PATENT APPLICATION

(11) **EP 4 561 086 A1**
(43) Date of publication of application: **28.05.2025**
(21) Application number: 23859850.2
(22) Date of filing: 07.07.2023
(51) Int. Cl.: H04N 23/60, G01N 21/17

(54) **INFORMATION PROCESSING DEVICE, INFORMATION PROCESSING METHOD, AND PROGRAM**

(30) Priority: 29.08.2022 JP 2022135686
(71) Applicant: Mitsubishi Heavy Industries, Ltd., Tokyo 100-8332 (JP)
(72) Inventor: KAMIHARA, Nobuyuki, Tokyo 100-8332 (JP); YANO, Yuki, Tokyo 100-8332 (JP); HIRANO, Kota, Tokyo 100-8332 (JP); IKEDA, Takashi, Tokyo 100-8332 (JP); SUZUKI, Keita, Tokyo 100-8332 (JP); ARAKAWA, Yoshiaki, Tokyo 100-8332 (JP); INUI, Masayuki, Tokyo 100-8332 (JP); SHIBUYA, Hidekazu, Tokyo 100-8332 (JP)
(74) Representative: Studio Torta S.p.A.
(86) International application number: PCT/JP2023/025281
(87) International publication number: WO 2024/048080

(57) **Abstract**

This information processing device comprises: an acquisition unit for acquiring a first image and a second image which are different frames and which have been captured by an imaging unit mounted on a moving body; a positioning unit that positions the first image and the second image; and a difference calculation unit that calculates the difference between the first image and the second image which have been positioned.

## Description

### Technical Field

The present disclosure relates to an information processing device, an information processing method, and a program.

Priority is claimed to Japanese Patent Application No. 2022-135686, filed August 29, 2022, the content of which is incorporated herein by reference.

### Background Art

PTL 1 discloses a gas leakage monitoring device that enables easy monitoring of gas leakage or the like in a relatively wide range of monitoring targets. That is, the gas leakage monitoring device disclosed in PTL 1 includes a visible image camera and an infrared image camera mounted on a flying object, and an image processing unit that combines a difference image in which pixels having no difference between frames in an infrared image are made transparent and a visible image and displays the combined image on a display unit. According to the gas leakage monitoring device disclosed in PTL 1, even in a case of a leakage of a transparent gas having the same temperature as the ambient temperature, the leakage can be visualized as an image corresponding to an infrared absorption spectrum of the gas, and the difference in brightness of each pixel can be obtained between frames. Therefore, it is possible to easily ascertain the leakage situation according to the situation of the jetting that changes every moment or the situation of the flow due to the wind. In addition, according to the gas leakage monitoring device disclosed in PTL 1, the visible images are combined even in a case where the field of view is shifted between the frames due to the flight movement or the vibration of the flying object, and the contours of subjects that are not gases tend to be emphasized as differences, so the enhanced portion is likely to be buried in the contour portion of the visible image, or the contour portion is recognized and thus the enhanced portion is not conspicuous. As a result, since the visibility is improved, it is possible to easily monitor the gas leakage.

NPL 1 discloses an example of a technique for performing registration of an image.

### Citation List

### Patent Literature

[PTL 1] Japanese Unexamined Patent Application Publication No. 2022-13126

### Non Patent Literature

[NPL 1] Yoshi Ri and Hiroshi Fujimoto, "Practical Algorithm Design for the FFT-based Robust Image Registration Method", The Transactions of the Institute of Electrical Engineers of Japan. D, A publication of Industry Applications Society, Vol. 139, No. 1, pp. 22-29, January 2019

### Summary of Invention

### Technical Problem

However, the gas leakage monitoring device disclosed in PTL 1 improves visibility by using ease of recognition of a contour portion of a subject such as a structure in a visible image. Therefore, for example, in a case where the contour portion of the subject in the visible image is not easily recognized, there is a problem that the visibility cannot be improved.

The present disclosure has been made to solve the above-described problems, and an object of the present disclosure is to provide an information processing device, an information processing method, and a program capable of easily detecting a detection target such as gas leakage.

### Solution to Problem

In order to achieve the above object, an information processing device according to the present disclosure includes an acquisition unit that acquires a first image and a second image captured by an imaging unit mounted on a moving body in different frames, a registration unit that performs registration of the first image and the second image, and a difference calculation unit that calculates a difference between the registered first image and the registered second image.

An information processing method according to the present disclosure includes a step of acquiring a first image and a second image captured by an imaging unit mounted on a moving body in different frames, a step of performing registration between the first image and the second image and, a step of calculating a difference between the registered first image and the registered second image.

A program according to the present disclosure causing a computer to execute a step of acquiring a first image and a second image captured by an imaging unit mounted on a moving body in different frames, a step of performing registration between the first image and the second image, and a step of calculating a difference between the registered first image and the registered second image.

### Advantageous Effects of Invention

According to the information processing device, the information processing method, and the program of the present disclosure, it is possible to easily detect a detection target such as gas leakage.

### Brief Description of Drawings

Fig. 1 is a diagram showing an example of a configuration of an information processing device according to a first embodiment of the present disclosure.
Fig. 2 is a flowchart showing an example of an operation of the information processing device according to the first embodiment of the present disclosure.
Fig. 3 is a flowchart showing an example of registration processing according to the first embodiment of the present disclosure.
Fig. 4 is a diagram for describing an example of an operation of the information processing device according to the first embodiment of the present disclosure.
Fig. 5 is a diagram showing an example of a configuration of an information processing device according to a second embodiment of the present disclosure.
Fig. 6 is a flowchart showing an example of an operation of the information processing device according to the second embodiment of the present disclosure.
Fig. 7 is a schematic block diagram showing a configuration of a computer according to at least one embodiment.

### Description of Embodiments

Hereinafter, an information processing device, an information processing method, and a program according to an embodiment of the present disclosure will be described with reference to the drawings. **In** each drawing, the same reference numerals will be assigned to the same or corresponding configurations, and description thereof will be omitted as appropriate.

### <First Embodiment>

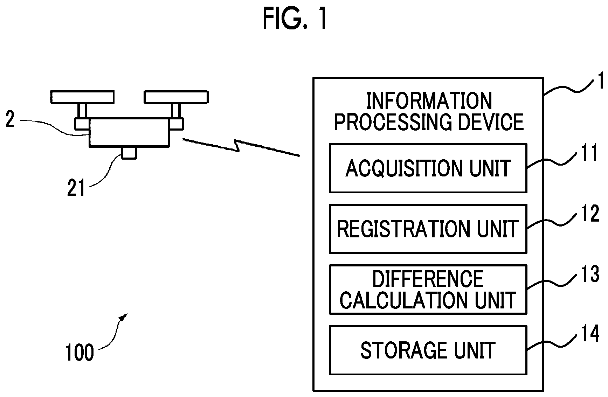

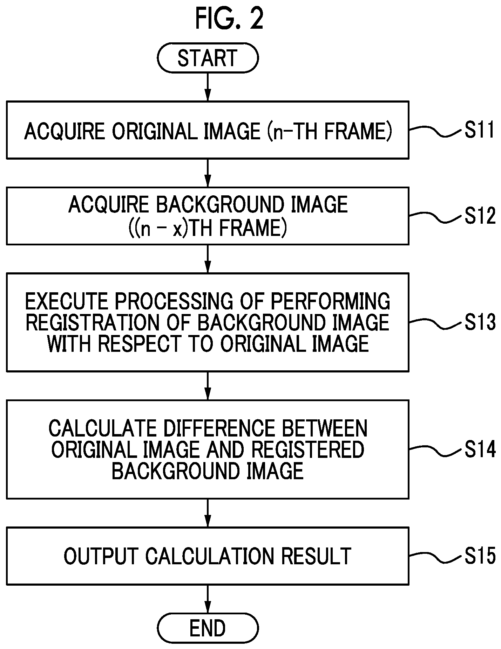

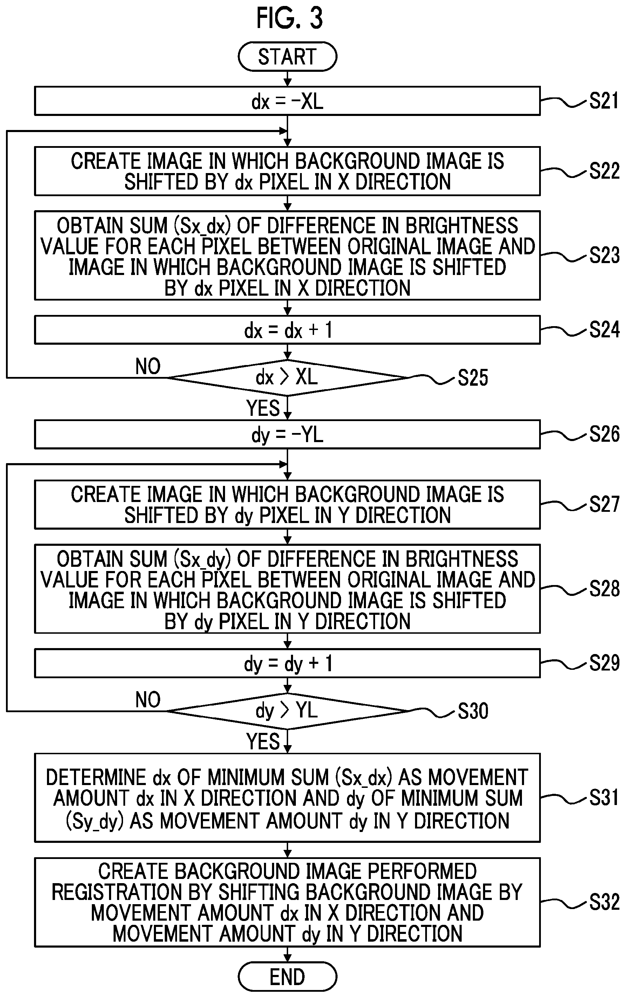

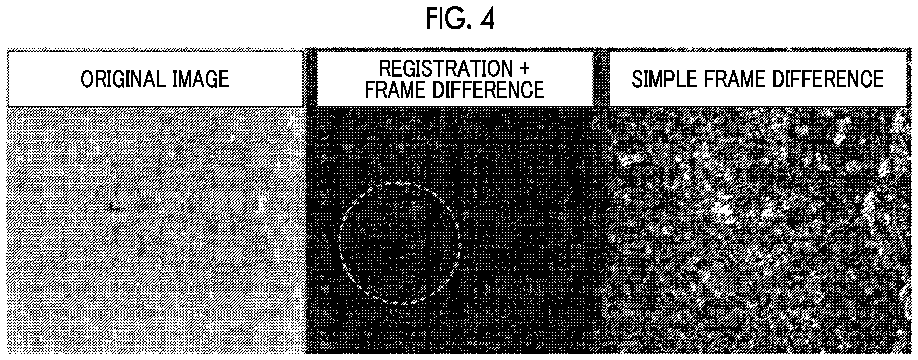

Fig. 1 is a diagram showing an example of a configuration of an information processing device according to a first embodiment of the present disclosure. Fig. 2 is a flowchart showing an example of an operation of the information processing device according to the first embodiment of the present disclosure. Fig. 3 is a flowchart showing an example of registration processing according to the first embodiment of the present disclosure. Fig. 4 is a diagram for describing an example of an operation of the information processing device according to the first embodiment of the present disclosure.

As shown in Fig. 1, the information processing device 1 according to the present embodiment is a device that processes an image captured by an imaging unit 21 mounted in a moving body 2 in the information processing system 100, and performs predetermined information processing for detecting a predetermined detection target such as gas leakage. The information processing system 100 includes an information processing device 1 and a moving body 2. In the example shown in Fig. 1, the moving body 2 is a drone. However, the moving body 2 is not limited to the drone (unmanned aerial vehicle), and may be, for example, a manned fixed wing aircraft or rotary wing aircraft, a satellite, a moving body that moves in contact with the ground or the water surface, or a moving body that moves in water. In addition, the detection target is not limited to the gas leakage, and for example, the presence or absence of the detection target or the movement of the detection target may appear in a difference between the frames of the captured images of the plurality of frames (for example, a difference in a brightness value or a pixel value for each pixel). Further, the imaging unit 21 may capture a visible light image, may capture an infrared image, or may capture a visible light image and an infrared image in combination. Furthermore, examples of the detection target include a colorless and transparent gas such as carbon dioxide, methane, and ammonia, smoke, and a colored gas, but the present disclosure is not limited thereto.

The information processing device 1 is configured by using a computer, and includes an acquisition unit 11, a registration unit 12, a difference calculation unit 13, and a storage unit 14 as a functional configuration composed of a combination of hardware, such as the computer and a peripheral device thereof, and software, such as a program executed by the computer. It should be noted that the information processing device 1 may receive the image data captured by the imaging unit 21 via wireless communication and process the image data in substantially real time, or may store the image data in a predetermined storage device and process the image data later. In addition, the information processing device 1 may be mounted on the moving body 2 together with the imaging unit 21. It should be noted that the information processing device 1 sequentially performs processing of detecting the detection target on the basis of the difference information between the frames in the images of the plurality of frames captured by the imaging unit 21. However, in the following, one image processing for two images (two frames) will be mainly described. Further, in the present embodiment, one of the two images is referred to as an original image, and the other image is referred to as a background image. The background image is an image that is a reference in a case in which the difference is calculated, and is an image on a side to be performed registration (to be changed) with respect to the original image (with the original image as a reference) in the registration processing described below. Furthermore, for example, in a case where the original image is an n-th frame image, the background image is an (n-x)-th frame image. n is a natural number (or an integer of 0 or more) representing a frame number of the image captured by the imaging unit 21, and x is an integer of 1 or more. It should be noted that the order of the first image and the second image according to the present disclosure is relative, and one of the original image or the background image corresponds to the first image and the other corresponds to the second image. In addition, the value of x (the frame interval between the two images) can be set in accordance with, for example, the moving speed of the moving body 2.

The acquisition unit 11 provided in the information processing device 1 acquires an original image and a background image captured by the imaging unit 21 mounted on the moving body 2 in different frames. The acquisition by the acquisition unit 11 includes acquisition from the imaging unit 21 via wireless communication and acquisition from the imaging unit 21 via wireless communication, storage in, for example, the storage unit 14, and acquisition from the storage unit 14.

The registration unit 12 performs registration between the original image and the background image. In the present embodiment, the registration unit 12 performs registration of the background image with respect to the original image. The registration is a process of moving, rotating, and deforming one image to match the other image such that the position, the size, and the shape of the same subject are the same between two images, and is also referred to as image registration or the like. The method of performing registration is not limited, and for example, a method of moving the images in horizontal and vertical directions such that the sum of the brightness values of the respective pixels of the two images is minimized as described below, a method described in NPL 1 or the like can be used. In the method of NPL 1, the estimation results of the enlargement/reduction and the rotation amount between the two images are used for the registration.

The difference calculation unit 13 calculates a difference between the background image and the original image performed registration the registration unit 12 for each corresponding pixel (pixel at the same position). For example, in a case where the background image and the original image are color images, the difference in the pixel value may be calculated for each pixel and each component, or the difference in the brightness value may be calculated for each pixel after conversion into the brightness value. In addition, in a case of an image of a grayscale scale, a difference in the brightness value (pixel value) is calculated for each pixel. It should be noted that the difference calculation unit 13 stores the calculation result of the difference in the storage unit 14 or displays the calculation result of the difference on a predetermined display unit. In the present embodiment, the difference calculation unit 13 stores or displays the calculation result, which is referred to as output.

The storage unit 14 stores the image data captured by the imaging unit 21 or stores the calculation result by the difference calculation unit 13.

Next, an example of an operation of the information processing device 1 will be described with reference to Figs. 2 and 3. The processing shown in Fig. 2 is an example of processing for each of one original image and one background image. The processing shown in Fig. 3 is an example of the registration processing executed in step S13 of Fig. 2.

In the processing shown in Fig. 2, first, the acquisition unit 11 acquires the original image (n-th frame) (step S11). Next, the acquisition unit 11 acquires the background image ((n - x)th frame) (step S12). Next, the registration unit 12 executes processing of performing registration of the background image with respect to the original image (step S13).

In the registration processing executed in step S13, as shown in Fig. 3, first, the registration unit 12 stores -XL in the variable dx (step S21). The value of the variable dx is a value representing how many pixels the background image is moved in the X direction (horizontal direction). -XL represents the number of pixels to be moved first, and in this example, the background image is moved from the -XL pixel to the +XL pixel in the X direction.

Next, the registration unit 12 creates an image in which the background image is shifted by dx pixels in the X direction (step S22). In step S22, the pixel at the end of the movement source is padded with zero. Next, the registration unit 12 obtains a sum Sx_dx of the differences in the brightness values for each pixel between the original image and the image shifted in step S22 (step S23). "dx" of the sum Sx_dx is a variable "sum Sx" as a subscript, and a numerical value representing the movement amount is set. Next, the registration unit 12 increases the variable dx by only 1 (step S24). Next, the registration unit 12 determines whether or not the variable dx is greater than the constant XL (step S25). In a case where the variable dx is not greater than the constant XL (step S25: NO), the registration unit 12 executes the processing after step S22 again.

On the other hand, in a case where the variable dx is greater than the constant XL (step S25: YES), the registration unit 12 stores -YL in the variable dy (step S26). The value of the variable dy is a value representing how many pixels the background image is moved in the Y direction (vertical direction). -YL represents the number of pixels to be first moved, and in this example, the background image is moved from the -YL pixel to the +YL pixel in the Y direction.

Next, the registration unit 12 creates an image in which the background image is shifted by dy pixels in the Y direction (step S27). In step S27, the pixel at the end of the movement source is padded with zero. Next, the registration unit 12 obtains a sum Sy_dy of the differences in the brightness values for each pixel between the original image and the image shifted in step S27 (step S28). "dy" of the sum Sy_dy is a variable "sum Sy" as a subscript, and a numerical value representing the movement amount is set. Next, the registration unit 12 increases the variable dy by only 1 (step S29). Next, the registration unit 12 determines whether or not the variable dy is greater than the constant YL (step S30). In a case where the variable dy is not greater than the constant YL (step S30: NO), the registration unit 12 executes the processing after step S27 again.

On the other hand, in a case where the variable dy is greater than the constant YL (step S30: YES), the registration unit 12 determines the subscript "dx" of the minimum sum (Sx_dx) as the movement amount in the X direction (dx) and the subscript "dy" of the minimum sum (Sy_dy) as the movement amount in the Y direction (dy) (step S31). Next, the registration unit 12 creates a background image performed registration by shifting the background image by the movement amount dx in the X direction and the movement amount dy in the Y direction (step S32).

Next, in step S14 of Fig. 2, the difference calculation unit 13 calculates the difference between the original image and the background image performed registration by the registration unit 12 in step S13 (step S32 in Fig. 3) (step S14). Next, the difference calculation unit 13 outputs the calculation result (step S15).

Fig. 4 shows an example of the original image, an image showing a calculation result of a difference between the registered background image and the original image (hereinafter, referred to as an image of "registration + frame difference"), and an image showing a calculation result of a difference between the unregistered background image and the original image (hereinafter, referred to as an image of "simple frame difference"). It should be noted that, in the image showing the calculation result of the difference, the brightness value is small (close to black) in a case where the difference is small, and the brightness value is large (close to white) in a case where the difference is large. In addition, the original image includes carbon dioxide gas that has been experimentally jetted in a range surrounded by a broken line circle in the image of "registration + frame difference". Further, the imaging place is a rough ground. Since the image of "registration + frame difference" is calculated the difference by performing registration of the imaging positions, the movement of carbon dioxide gas is captured. On the other hand, in the image of the "simple frame difference", the difference information corresponding to the carbon dioxide gas is not extracted because the imaging position is changed. It should be noted that the registration processing is performed using the method described in NPL 1.

### (Actions and Effects of Present Embodiment)

According to the present embodiment, since the difference processing is performed after the position of the background (background image) is corrected, it is possible to suppress the influence of the movement or the vibration of the moving body 2 as compared with a case in which the position correction is not performed, and it is possible to easily detect the detection target.

### <Second Embodiment>

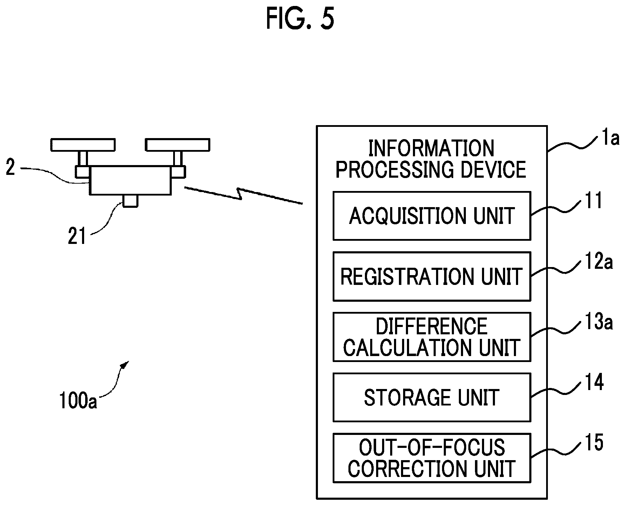

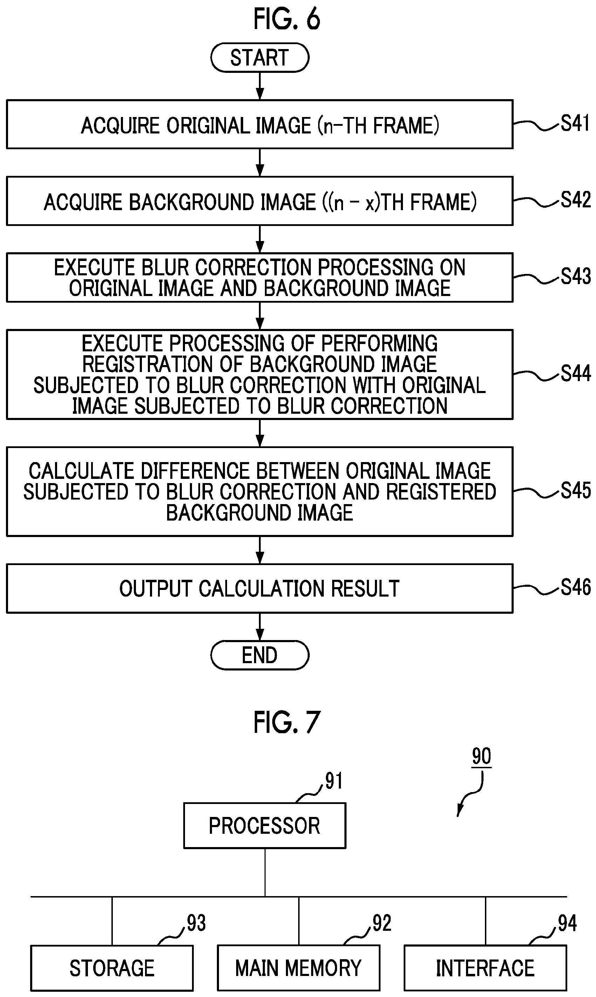

Fig. 5 is a diagram showing an example of a configuration of an information processing device according to a second embodiment of the present disclosure. Fig. 6 is a flowchart showing an example of an operation of the information processing device according to the second embodiment of the present disclosure.

As shown in Fig. 5, the information processing device 1a in the information processing system 100a according to the second embodiment is different from the information processing device 1 in the first embodiment shown Fig. 1 in that the out-of-focus correction unit 15 is newly provided, the registration unit 12a sets the original image and the background image processed by the out-of-focus correction unit 15 as processing targets, and the difference calculation unit 13a sets the original image and the background image processed by the out-of-focus correction unit 15 as processing targets.

The out-of-focus correction unit 15 shown in Fig. 5 corrects an out-of-focus of the background image and the original image. In addition, the registration unit 12a performs registration between the background image in which the out-of-focus is corrected and the original image in which the out-of-focus is corrected. Further, the difference calculation unit 13a calculates a difference between the registered background image subjected to out-of-focus correction and the original image subjected to out-of-focus correction.

In addition, "out-of-focus" means a state in which the subject is not in focus. A method of the out-of-focus correction processing by the out-of-focus correction unit 15 is not limited. The out-of-focus correction processing may be, for example, processing of emphasizing a contour. In addition, as the out-of-focus correction processing, for example, a method of estimating a deterioration trajectory (point spread function (PSF)) of an image whose image quality is deteriorated by a blind deconvolution method or the like and restoring the image based on the estimated PSF may be used.

Next, an example of an operation of the information processing device 1a will be described with reference to Fig. 6. In the processing shown in Fig. 6, first, the acquisition unit 11 acquires the original image (n-th frame) (step S41). Next, the acquisition unit 11 acquires the background image ((n - x)th frame) (step S42). Next, the out-of-focus correction unit 15 executes out-of-focus correction processing on the original image and the background image (step S43). Next, the registration unit 12a executes processing of performing registration of the background image subjected to out-of-focus correction with the original image subjected to out-of-focus correction (step S44).

Next, the difference calculation unit 13a calculates a difference between the original image subjected to the out-of-focus correction and the background image performed registration by the registration unit 12a in step S44 (step S45). Next, the difference calculation unit 13a outputs the calculation result (step S46).

### (Actions and Effects of Present Embodiment)

According to the present embodiment, it is possible to improve the detection sensitivity of the detection target even for an out-of-focus image.

### (Actions and Effects)

In the information processing device, the information processing method, and the program according to the above configuration, after performing registration of a background image and an original image captured by the imaging unit mounted on the moving body in different frames, a difference between the frames is calculated. Therefore, with the information processing device, the information processing method, and the program of the embodiment, it is possible to easily detect a detection target such as gas leakage.

### (Other Embodiments)

The embodiments of the present disclosure have been described in detail with reference to the drawings hereinbefore. However, the specific configuration is not limited to the embodiments, and includes design changes and the like within a scope not departing from the gist of the present disclosure.

### <Configuration of Computer>

Fig. 7 is a schematic block diagram showing a configuration of a computer according to at least one embodiment.

A computer 90 includes a processor 91, a main memory 92, a storage 93, and an interface 94.

The above-described information processing devices 1 and 1a are mounted on the computer 90. The operation of each processing unit described above is stored in the storage 93 in a form of a program. The processor 91 reads the program from the storage 93, loads the program into the main memory 92, and performs the above-described processes in accordance with the program. Further, the processor 91 ensures a storage area corresponding to each storage unit described above in the main memory 92 in accordance with the program.

The program may implement some of functions performed by the computer 90. For example, the program may implement the functions in combination with another program already stored in the storage or in combination with another program installed on another device. In another embodiment, in addition to the above-described configuration or instead of the above-described configuration, the computer may include a custom large scale integrated circuit (LSI) such as a programmable logic device (PLD). Examples of the PLD include a programmable array logic (PAL), a generic array logic (GAL), a complex programmable logic device (CPLD), and a field programmable gate array (FPGA). In this case, some or all of the functions implemented by the processor may be implemented by the integrated circuit.

Examples of the storage 93 include a hard disk drive (HDD), a solid state drive (SSD), a magnetic disc, a magneto-optical disc, a compact disc read only memory (CD-ROM), a digital versatile disc read only memory (DVD-ROM), and a semiconductor memory. The storage 93 may be an internal medium directly connected to a bus of the computer 90, or may be an external medium connected to the computer 90 via the interface 94 or a communication line. In addition, when the program is distributed to the computer 90 via the communication line, the computer 90 receiving the distribution may load the program into the main memory 92, and may perform the above-described processes. In at least one embodiment, the storage 93 is a non-temporary tangible storage medium.

### <Additional Notes>

For example, the information processing devices 1 and 1a described in each embodiment are understood as follows.

(1) Information processing devices 1 and 1a according to a first aspect include an acquisition unit 11 that acquires a first image and a second image captured by an imaging unit 21 mounted on a moving body 2 in different frames, a registration unit 12 or 12a that performs registration of the first image and the second image, and a difference calculation unit 13 or 13a that calculates a difference between the registered first image and the registered second image. According to the present aspect and each aspect below, it is possible to easily detect a detection target such as gas leakage.
(2) The information processing device 1a according to a second aspect is the information processing device according to (1), further including an out-of-focus correction unit 15 that corrects an out-of-focus of the first image and the second image, in which the registration unit 12a performs registration between the first image and the second image in which the out-of-focus is corrected. According to the present aspect, it is possible to improve the detection sensitivity for the out-of-focus image.
(3) The information processing devices 1 and 1a according to a third aspect are the information processing device according to (1) or (2), in which a frame interval between the first image and the second image is set in accordance with a moving speed of the moving body. According to this aspect, the frame interval between the first image and the second image can be appropriately changed in accordance with the speed of the moving body.

### Industrial Applicability

According to the above-described one aspect, the information processing device, the information processing method, and the program can easily detect a detection target such as gas leakage.

### Reference Signs List

1, 1a: information processing device
2: moving body
11: acquisition unit
12, 12a: registration unit
13, 13a: difference calculation unit
14: storage unit
15: out-of-focus correction unit

## Claims

1. An information processing device comprising:
an acquisition unit that acquires a first image and a second image captured by an imaging unit mounted on a moving body in different frames;
a registration unit that performs registration of the first image and the second image; and
a difference calculation unit that calculates a difference between the registered first image and the registered second image.

2. The information processing device according to claim 1, further comprising:
an out-of-focus correction unit that corrects an out-of-focus of the first image and the second image,
wherein the registration unit performs registration between the first image and the second image in which the out-of-focus is corrected.

3. The information processing device according to claim 1 or 2,
wherein a frame interval between the first image and the second image is set in accordance with a moving speed of the moving body.

4. An information processing method comprising:
a step of acquiring a first image and a second image captured by an imaging unit mounted on a moving body in different frames;
a step of performing registration between the first image and the second image; and
a step of calculating a difference between the registered first image and the registered second image.

5. A program causing a computer to execute:
a step of acquiring a first image and a second image captured by an imaging unit mounted on a moving body in different frames;
a step of performing registration between the first image and the second image; and
a step of calculating a difference between the registered first image and the registered second image.
